# EUROPEAN PATENT SPECIFICATION

(11) **EP 4 068 974 B1**
(45) Date of publication and mention of the grant of the patent: **03.06.2026**
(21) Application number: 20824357.6
(22) Date of filing: 24.11.2020
(51) Int. Cl.: A21D 2/16, A21D 2/18, A21D 2/26, A23L 29/212, A23L 29/281, A23L 33/20

(54) **FOOD FORMULATION AND BAKED FOOD PRODUCT FOR MANAGING THE KETOGENIC DIET**
LEBENSMITTELFORMULIERUNG UND GEBACKENES NAHRUNGSMITTELPRODUKT ZUM MANAGEN DER KETOGENEN ERNÄHRUNGSWEISE
FORMULATION ALIMENTAIRE ET PRODUIT ALIMENTAIRE CUIT POUR LA GESTION DU RÉGIME CÉTOGÈNE

(30) Priority: 03.12.2019 IT 201900022854
(43) Date of publication of application: 12.10.2022
(73) Proprietor: Dr. Schär S.P.A., 39014 Postal (IT)
(72) Inventor: CERNE, Virna Lucia, 34011 DUINO-AURISINA (IT); BARBAN, Fabio, 33100 UDINE (IT)
(74) Representative: Petraz, Davide Luigi
(86) International application number: PCT/IT2020/050291
(87) International publication number: WO 2021/111483

(56) References cited:
- EP-A1- 3 001 914
- EP-A1- 3 170 409
- WO-A1-00/15216
- CN-B- 102 648 749
- US-A1- 2008 089 981
- PAPAVASSILIS ET AL: "Medium-chain triglycerides inhibit growth of Malassezia: implications for prevention of systemic infection", CRITICAL CARE MEDICINE., vol. 27, no. 9, 1 January 1999 (1999-01-01), US, pages 1781 - 1786, XP055462704, ISSN: 0090-3493, DOI: 10.1097/00003246-199909000-00013

## Description

### FIELD OF THE INVENTION

Embodiments described here concern a food formulation and a food product, preferably but not exclusively to be used by individuals affected by particular physiological and/or pathological conditions, on the basis of which particular dietary regimes may be advised, characterized by a low carbohydrate content. In particular, embodiments described here concern a food formulation and a baked food product obtainable by means of said food formulation and suitable for managing the ketogenic diet, in particular for the treatment of physiological and/or pathological conditions of individuals by means of the ketogenic diet.

### BACKGROUND OF THE INVENTION

Particular physiological and/or pathological conditions that can arise in individuals are known, for which particular dietary regimes, characterized by a low carbohydrate content, can be advised and sometimes prescribed.

Among these diets the so-called "ketogenic diet" can be included, a term which typically refers to a category of diets intended to promote the formation of so-called "ketone bodies" in the organism.

The term ketone bodies typically refers to three compounds present in the blood in small quantities, that is acetone (propanone), acetoacetic acid (3-oxobutanoic acid) and beta-hydroxybutyric acid (3-hydroxybutanoic acid), which in particular conditions can be metabolized by the body, as an alternative to glucose, to provide the necessary energy supply.

The ketogenic diet was initially used successfully for the treatment of drug-resistant epilepsy ("A multicenter study of the efficacy of the ketogenic diet", Vining EP, Freeman JM, Ballaban-Gil K, Camfield CS, Camfield PR, Holmes GL, Shinnar S, Shuman R, Trevathan E, Wheless JW, Arch. Neurol., 1998 Nov; 55 (11): 1433-7; "The ketogenic diet - update on recent clinical trials", Cross JH, Neal EG Epilepsia. 2008 Nov; 49 Suppl 8: 6-10), and other therapeutic uses have also been much studied, including the treatment of neurodegenerative diseases, in particular Alzheimer's disease, Parkinson's disease, autism, multiple sclerosis, migraine, tumors and brain trauma.

Although the action mechanisms remain at least partly unknown, some experimental evidence shows that its efficacy is closely correlated to the normalization of the conditions of energy metabolism altered by these physiological and/or pathological conditions ("Pathophysiology of Epilepsy in Autism Spectrum Disorders", Stafstrom CE, Hagerman PJ, Pessah IN, Editors; "Jasper's Basic Mechanisms of the Epilepsies" (Internet], 4th edition, Bethesda (MD): National Center for Biotechnology Information (US), 2012).

In particular, the most important beneficial effects connected to the ketogenic diet seem to be correlated to the improvement of mitochondrial functions, reduction of oxidative stress, and, with particular reference to Alzheimer's disease, the onset of particular inflammatory activities that induce an improvement in memory encoding ("Anti-Oxidant and Anti-Inflammatory Activity of Ketogenic Diet: New Perspectives for Neuroprotection in Alzheimer's Disease", Pinto A, Bonucci A, Maggi E, Corsi M, Businaro R, Antioxidants (Basel), 2018 Apr 28; 7 (5), pii: E63, doi: 10.3390/antiox7050063, Review).

It has also been shown that the increase in the concentration of ketone bodies in the blood produces a neuro-protective effect since it increases the level of ATP, reducing the production of ROS (Reactive Oxygen Species), ("Ketone bodies are protective against oxidative stress in neocortical neurons Kim DY, Davis LM, Sullivan PG, Maalouf M, Simeone TA, van Brederode J, Rho JM; J Neurochem., 2007 Jun; 101 (5): 1316-26. Epub 2007 Mar 30).

A clinical study ("Treatment of Parkinson disease with diet-induced hyperketonemia: a feasibility study", Vanitallie TB, Nonas C, Di Rocco A, Boyar K, Hyams K, Heymsfield SB, Neurology, 2005 Feb 22; 64 (4): 728-30) also found improvements in the score on the Parkinson's disease rating scale in five out of seven patients, due to the fact that ketone bodies can bypass the mitochondrial dysfunctions implicated in this pathological condition and connected to glucose metabolism.

*In vitro* studies have also shown a protective effect carried out by ketone bodies against these mitochondrial dysfunctions ("Ketones prevent synaptic dysfunction induced by mitochondrial respiratory complex inhibitors", Kim DY, Vallejo J, Rho JM, J Neurochem; 2010 Jul; 114 (1): 130-41).

The ketogenic diet has also been studied as a therapy for some forms of migraine and benefits have been shown in reducing the frequency and duration of attacks in patients treated for a period of one month ("Cortical functional correlates of responsiveness to short- lasting preventive intervention with ketogenic diet in migraine: a multimodal evoked potentials study", Di Lorenzo C, Coppola G, Bracaglia M, Di Lenola D, Evangelista M, Sirianni G, Rossi P, Di Lorenzo G, Serrao M, Parisi V, Pierelli F, J. Headache Pain, 2016; 17: 58, doi: 10.1186/s10194-016-0650-9, Epub 2016 May 31).

With regard to autism, a condition that has a strong impact on the development of patients' language and social function, despite the different etiology leading to consider a wide spectrum of causes, there seems to be limited but promising clinical evidence at the moment regarding a positive effect of the ketogenic diet in the reduction of certain altered behaviors.

In the ketogenic diet, in order to promote ketogenesis, the nutrients are carefully balanced according to the so-called ketogenic ratio, that is, in such a way that the amount of lipids supplied to the body is very prevalent compared to the sum of proteins and carbohydrates, for example substantially double the sum of proteins and carbohydrates, or even higher multiples.

The ketogenic diet therefore provides a reduction in the consumption of carbohydrates and partly of proteins, in favor of the consumption of triglycerides.

Food products are known which satisfy the ketogenic ratio and can be consumed by individuals following the ketogenic diet.

One disadvantage of known food products is that the need to guarantee the ketogenic ratio can be to the detriment of other nutritional or organoleptic properties of the products themselves, which can therefore be unbalanced.

In particular, one disadvantage of known food products is that the need to guarantee the ketogenic ratio, that is, the strong prevalence of fats, in particular triglycerides, can be detrimental to the digestibility of the product itself.

The high fraction of lipids, in particular triglycerides, can require the body to make a considerable effort to be digested and assimilated, for example requiring particular enzymes, such as lipase, necessary to catalyze the hydrolysis thereof.

Document EP-A-3.001.914 describes dietary mixtures and products for human consumption, in particular conditions in which it is necessary to eliminate carbohydrates.

Document CN-B-102648749 describes a nutrient formulation in powder form for the ketogenic therapy of epileptic patients.

There is therefore a need to perfect a food formulation and product that can overcome at least one of the disadvantages of the state of the art.

In particular, one purpose of the present invention is to provide a food formulation and product in which the ketogenic ratio between lipids, proteins and carbohydrates is guaranteed, and that the nutritional and organoleptic properties are adequate and satisfied.

Furthermore, one purpose of the present invention is to provide a food formulation and product that are more balanced, from a nutritional point of view, than known products.

Another purpose of the present invention is to provide a food formulation and product that are more digestible than the products known in this specific sector.

Still another purpose of the present invention is to provide a food formulation and product that do not deregulate, over time, the intestinal bacterial flora, and which do not inhibit the proliferation of microorganisms necessary for normal intestinal functioning.

Another purpose of the present invention is to provide a food formulation and product that do not require the body to make a considerable effort to digest and assimilate lipids.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, embodiments described here concern a food formulation and a baked food product, or also hereafter food product for short, which can be obtained from such food formulation and is able to manage the ketogenic diet, which overcome the limits of the state of the art and eliminate the defects present therein. In particular, the food formulation and the corresponding food product are useful for treating physiological and/or pathological conditions of individuals by means of the ketogenic diet.

Some embodiments concern a food formulation, from which the baked food product can be obtained.

The food formulation of the present invention comprises:
- lipids comprised between 20% and 60% by weight, more particularly between 23% and 33% by weight;
- proteins comprised between 0.25% and 9.5% by weight;
- carbohydrates comprised between 0.5% and 8% by weight;
- vegetable fibers comprised between 10% and 38% by weight.

Other embodiments concern a baked food product that can be obtained by cooking the food formulation in an oven.

The food product of the present invention comprises:
- lipids between 22% and 62%, more particularly between 25% and 35% by weight;
- proteins between 0.25% and 10.5% by weight;
- carbohydrates between 0.5% and 8% by weight;
- vegetable fibers between 12% and 40% by weight.

The lipids in the food formulation and in the food product comprise medium-chain triglycerides (MCTs), that is, triglycerides derived from saturated medium-chain fatty acids (MCFAs), which have aliphatic carbon chains comprising from 6 to 12 carbon atoms, and can be supplied as vegetable oil.

In some embodiments, MCTs constitute from 30% to 100%, in particular from 35% to 95%, by weight of the total quantity by weight of lipids present in the food formulation and in the food product described here.

In some embodiments, MCTs constitute from 30% to 60% by weight of the total quantity by weight of lipids present in the food formulation and in the food product described here.

In other embodiments, MCTs constitute from 80% to 100% by weight of the total quantity by weight of lipids present in the food formulation and in the food product described here.

The Applicant has found that the presence of MCTs is very advantageous, since they are effective in promoting a rapid start of ketogenesis, that is, a rapid entry of the body into a condition of ketosis.

In addition, the Applicant has found that MCTs are particularly effective and active in the treatment of neurodegenerative diseases.

In some embodiments, the food formulation and the baked food product have a ketogenic ratio between lipids and sum of carbohydrates and proteins from 1.5:1 to 2.5:1.

In other embodiments, the food formulation and the baked food product can have all the possible ratios between lipids and sum of carbohydrates and proteins compatible with the respective compositions described here and, when these ratios are different from the range between 1.5:1 and 2.5:1, they can be used to manage the ketogenic diet in combination with other foods, such as for example lipid supplements.

It is therefore implicit in the present description that, although the food formulation and the food product are suitable to manage the ketogenic diet, this does not necessarily imply that, individually, they satisfy the ketogenic ratio, but that they can be used functionally within dietary regimes in order to promote ketogenesis.

Advantageously, the food formulation and the baked food product described here are able to manage the ketogenic diet and, moreover, are at the same time nutritionally more balanced, more digestible, and with a better composition of nutrients and ingredients, compared to other solutions known in the state of the art.

### DETAILED DESCRIPTION OF SOME EMBODIMENTS

We will now refer in detail to the various embodiments of the invention. Each example is supplied by way of illustration of the.

For example, the characteristics shown or described insomuch as they are part of one embodiment can be adopted on, or in association with, other embodiments to produce another embodiment. It is understood that the present invention shall include all such modifications and variants.

Before describing these embodiments, we must also clarify that the present description can be obtained or executed in various other ways. We must also clarify that the phraseology and terminology used here is for the purposes of description only, and cannot be considered as limitative.

Unless otherwise defined, all the technical and scientific terms used here and hereafter have the same meaning commonly understood by a person of ordinary skill in the state of the art to which the present invention belongs.

Although methods and materials similar or equivalent to those described here can be used when putting into practice or in the verification tests of the present disclosure, some methods and materials are described, by way of example, below.

In the event of conflict, the present application, including its definitions, prevails.

The materials, methods and examples are for the purposes of description only and cannot be considered as limitative.

Furthermore, unless otherwise indicated, all percentages, fractions and ratios between the different components are to be understood as fractions by weight (w/w) with respect to the total weight of the formulation, composition or product, even if not explicitly indicated.

All the intervals reported here shall be understood to include the extremes, including those that report an interval "between" two values, unless otherwise indicated.

The present description also includes the intervals that derive from uniting or overlapping two or more intervals described, unless otherwise indicated.

The present description also includes the intervals that can derive from the combination of two or more values taken at different points, unless otherwise indicated.

All percentage intervals reported here are provided with the provision that the sum with respect to the overall composition is 100%, unless otherwise indicated.

Here and hereafter in the present description, with the expression food formulation for a baked product, or food formulation, we mean a recipe, assembly, mixture, dough or suchlike of food ingredients before cooking, aimed at making a baked food product by cooking.

Furthermore, with the expression baked food product, or food product, we mean a product cooked in an oven.

Some embodiments described here concern a food formulation from which it is possible to obtain a baked food product which comprises at least lipids, proteins, carbohydrates and vegetable fibers.

Some embodiments described here also concern a baked food product that can be obtained by cooking the food formulation, which comprises at least lipids, proteins, carbohydrates and vegetable fibers, in an oven.

In some embodiments, the baked food product can be for example bread, biscuits, crackers, bread sticks, sweet and or savory snacks or similar baked products, which can be obtained by cooking the food formulation in an oven.

In further embodiments, the baked food product can be gluten-free or with a reduced gluten content. With the expression "gluten-free" we mean that gluten is present up to a maximum of 20 ppm. A possible example of a gluten-free baked food product is gluten-free bread.

In possible embodiments, the food formulation and the food product have, individually, a ketogenic ratio between lipids and sum of carbohydrates and proteins of from 1.5:1 to 2.5:1, for example of 1.5:1, 1.55:1, 1.6:1, 1.65:1, 1.7:1, 1.75:1, 1.8:1, 1.85:1, 1.9:1, 1.95:1, 2:1, 2.05:1, 2.1:1, 2.15:1, 2.2:1, 2.25:1, 2.3:1, 2.35:1, 2.4:1, 2.45:1, 2.5:1, or also intermediate values.

In those embodiments in which the food product is bread, the food formulation and the food product can have a ratio between lipids and sum of carbohydrates and proteins comprised between 1.5:1 and 2.5:1, for example 2:1.

In further possible embodiments, other values are also considered, and the food formulation and the food product can have any ratio whatsoever between lipids and sum of carbohydrates and proteins greater than that indicated above and compatible with the percentage compositions described here.

For example, in those embodiments in which the food product is biscuits, crackers, breadsticks, sweet and/or savory snacks or similar baked products, the food formulation and the food product can have a ratio between lipids and sum of carbohydrates and proteins comprised between 1.5:1 and 6:1, for example 3:1, 3.5:1, 4:1, 4.5:1, 5:1, 5.5:1, 6:1.

In the present description, the percentage differences between the composition of the food formulation and of the food product can be mainly attributed to the so-called "weight loss" phenomenon, which is due to water losses following cooking.

For example, in the event bread is the food product, the food formulation can comprise a water content from 25% to 55% by weight, in particular from 25% to 40% by weight, for example from 30% to 35% by weight, and the weight loss can be estimated as a reduction from 5% to 25%, in particular from 5% to 20%, more in particular from 5% to 15% of the initial weight before cooking.

In other cases, for example in which biscuits are the food product, the food formulation may not provide to add water as such, and the necessary water can be supplied by means of other liquid ingredients, such as for example liquid albumen.

It is clear that in order to obtain the food product starting from the food formulation, in addition to cooking in the oven, other operations can also be performed, such as for example mixing, leavening, cooling, toasting, or other.

For example, in the event the food product is bread sticks or crackers, the food formulation can comprise water as such, as is the case for bread. However, in the final product the water will be largely eliminated following the process of oven cooking and toasting, necessary for these specific products.

In some embodiments, which can be combined with all of the embodiments described here, before cooking the food formulation comprises proteins between 0.25% and 14%. In further embodiments, before cooking the food formulation comprises proteins between 0.25% and 9.5%, for example, in particular for producing bread, with or without gluten.

In some embodiments, which can be combined with all of the embodiments described here, after cooking the food product comprises proteins between 0.25% and 10.5%, for example, in particular in the case of bread, with or without gluten.

Advantageously, this protein content allows to reach high ketogenic ratios, making the ketogenesis of the present food formulation and of the present food product more effective compared to similar known solutions.

In some embodiments, the proteins comprised in the food formulation and in the food product can comprise proteins of vegetable origin, or vegetable proteins, in particular according to the respective percentage compositions indicated above. In possible implementations, the proteins can be exclusively proteins of vegetable origin. In other possible implementations, the proteins can be exclusively proteins of animal origin.

In other embodiments, the proteins can comprise both proteins of vegetable origin, and also proteins of animal origin, or animal proteins.

Furthermore, the proteins can also be associated with the presence of yeasts and/or enzymes, better described below.

In those embodiments in which both vegetable proteins and also animal proteins are provided, the food formulation and the food product can provide a high fraction of vegetable proteins compared to animal proteins.

In particular, in some embodiments, which can be combined with all of the embodiments described here, the food formulation can provide vegetable proteins from 0.25% to 9.5% and animal proteins from 0% to 4.5%. In the event animal proteins are also present, they can for example range from 0.25% to 4.5%.

In some embodiments, which can be combined with all of the embodiments described here, the food product can provide vegetable proteins from 0.25% to 10% and animal proteins from 0% to 5%. In the event animal proteins are also present, they can for example range from 0.25% to 5%. In some embodiments, which can be combined with all of the embodiments described here, the vegetable proteins are obtained from vegetable sources which include, for example, gluten, lupine protein, hazelnut protein, soy protein, pea protein, rice protein, oat protein, almond protein, or combinations thereof.

In some embodiments, which can be combined with all of the embodiments described here, the animal proteins can come from products of animal origin obtained from any suitable source whatsoever, for example cattle, sheep, goats, pigs, poultry, insects, fish products, or others more.

In some embodiments, the animal proteins can be supplied as albumen.

In some embodiments, the animal proteins can be supplied as milk.

Advantageously, in some embodiments, a high ratio between the vegetable proteins and the animal proteins allows to obtain a food formulation and a food product which are better than other known solutions.

In addition, the vegetable proteins, especially when used in combination with vegetable fibers, can reduce blood cholesterol levels ("Hypocholesterolaemic effects of lupine protein and pea protein/fiber combinations in moderately hypercholesterolaemic individuals", Sirtori CR, Triolo M, Bosisio R, Bondioli A, Calabresi L, De Vergori V, Gomaraschi M, Mombelli G, Pazzucconi F, Zacherl C, Arnoldi A, Br. J. Nutr., 2012 Apr, 107 (8):1176-83, doi:10.1017/S0007114511004120. Epub 2011 Oct 28).

In the present description, we will refer to carbohydrates, meaning carbohydrates that are metabolized by the body. Substances that are not metabolized, despite having a chemical structure that can be associated with carbohydrates, are therefore excluded, such as resistant starches, fibers and cellulosic substances.

In some embodiments, polyalcohols possibly present in one or more of the ingredients supplied are also excluded from the carbohydrate count.

In some embodiments, which can be combined with all of the embodiments described here, the food formulation comprises carbohydrates from 0.5% to 8%.

In some embodiments, which can be combined with all of the embodiments described here, the food product comprises carbohydrates between 0.5% and 8%.

In some embodiments, which can be combined with all of the embodiments described here, the fraction of carbohydrates in the food formulation and in the food product comprises sugars lower than or equal to 1%.

Advantageously, this reduced content of carbohydrates, and in particular of sugars, allows to reach high ketogenic ratios, making the ketogenesis of the present food formulation and of the present food product more effective than similar known solutions.

In some embodiments, which can be combined with all of the embodiments described here, sources of sugar can comprise sucrose and/or dextrose and/or barley malt, or combinations thereof.

In some embodiments, which can be combined with all of the embodiments described here, the carbohydrates can partly or totally originate from impurities present in the various components.

The sum of proteins and carbohydrates in the food formulation can therefore be comprised between 0.75% and 22%, in particular between 0.75% and 17.5%; and in the food product between 0.75% and 23%, in particular between 0.75% and 18.5%.

The food formulation and the food product comprise a fraction of lipids suitable to manage the ketogenic diet, which can be determined with a view to both guarantee the desired ketogenic ratio, in relation to the sum of proteins and carbohydrates, and also to give the food formulation and the food product other advantageous properties.

In particular, in the present invention the fraction of lipids has been identified considering that too low a fraction of lipids would not allow to obtain an effective ketogenic diet, since ketogenesis would not be sufficiently stimulated, while too high a fraction of lipids could lead to the disadvantages mentioned above, linked to the digestibility of the food product, an unpleasant taste, the lack of some nutritional factors or others.

In addition, too high a fraction of lipids could prevent other substances from being included in the food formulation and in the food product, for example to improve their digestibility or to provide other beneficial effects.

For these reasons, the food formulation of the present invention comprises lipids between 20% and 60%, more particularly between 20% and 40%, even more particularly between 23% and 33%.

In some embodiments, which can be combined with all of the embodiments described here, the food product comprises lipids between 22% and 62%, more particularly between 22% and 42%, even more particularly between 25% and 35%.

Embodiments of the present invention are also possible, in which the food formulation and the food product have all the possible ketogenic ratios that are compatible with the percentage compositions reported here.

For example, by using a fraction of lipids of 35% it is possible to obtain a food product with a ketogenic ratio of 2:1, 3:1, 4:1, 10:1, 17:1, supplying proteins and carbohydrates in quantities such that the sum is 17.5%, 11.67%, 8.75%, 3.5%, 2.06%, respectively.

These embodiments with a high content of lipids can be used to supply products aimed at increasing the intake of the fraction of lipids within a diet, preferably taken in combination with other foods.

Similarly, in the event, for example, it were necessary to integrate the food product with other substances, it is possible to use a low fraction of lipids, for example of 25%, and obtain a ketogenic ratio of 2:1, 3:1, 4:1, 10:1, 12:1, supplying proteins and carbohydrates in quantities such that the sum is 12.5%, 8.34%, 6.25%, 2.5%, 2%, respectively.

These different ratios allow to administer balanced ketogenic diets that have different effectiveness, based on the particular physiological and/or pathological conditions of individuals.

Advantageously, therefore, these fractions associated with the lipids allow to obtain a food product characterized by a high ratio between lipids and sum of proteins and carbohydrates, but also to avoid including an excessive fraction of lipids, thus allowing to provide a balanced ketogenic diet, in particular in the embodiments which provide the presence of MCTs in the lipids, which promote a rapid establishment of the conditions of ketosis.

The term "lipids" and its derivatives, such as "fraction of lipids", is understood here in the sense commonly used in the state of the art, with particular reference to the definition by IUPAC (International Union of Pure and Applied Chemistry) of "substances of biological origin soluble in non-polar solvents" (source: PAC, 1995, 67, 1307, "Glossary of class names of organic compounds and reactivity intermediates based on structure", IUPAC Recommendations 1995, page 1348).

In some embodiments, which can be combined with all of the embodiments described here, sources of lipids can comprise possible stabilizing and/or emulsifying substances, provided in the formulation (better described below), and/or vegetable oils, and/or vegetable fats, or combinations thereof.

In some embodiments, which can be combined with all of the embodiments described here, the lipids in the food formulation and in the food product comprise medium-chain triglycerides (MCTs), that is, triglycerides derived from saturated medium-chain fatty acids (MCFAs), which have aliphatic chains of carbon comprising from 6 to 12 carbon atoms.

In some embodiments, which can be combined with all of the embodiments described here, the medium-chain triglycerides (MCTs) can comprise triglycerides substantially derived from caproic acid (hexanoic acid), caprylic acid (octanoic acid), capric acid (decanoic acid), lauric acid (dodecanoic acid), or combinations thereof.

In one specific embodiment, the MCTs that can be used in the present invention comprise triglycerides substantially derived from octanoic acid (C8), decanoic acid (C10) and lauric acid (C12), or combinations thereof.

In one specific embodiment, the MCTs that can be used in the present invention substantially consist of triglycerides derived from octanoic acid (C8), decanoic acid (C10), or combinations thereof, although other substances can be present, in the form of traces or impurities, such as for example caproic acid (C6), heptanoic acid (C7), lauric acid (C12).

In another specific embodiment, the MCTs that can be used in the present invention comprise triglycerides substantially derived exclusively from lauric acid (C12).

In some embodiments, which can be combined with all of the embodiments described here, in the food formulation and in the food product the fraction of lipids can be supplied as vegetable oils and/or vegetable fats, containing a mixture of MCTs, for example of caprylic acid and capric acid and/or lauric acid triglycerides.

In some embodiments, MCTs constitute from 30% to 100%, in particular from 35% to 95%, by weight of the total quantity by weight of lipids present in the food formulation and in the food product described here.

In some embodiments, MCTs constitute from 30% to 60% by weight of the total quantity by weight of lipids present in the food formulation and food product described here.

In other embodiments, MCTs constitute from 80% to 100% by weight of the total quantity by weight of lipids present in the food formulation and food product described here. One advantage linked to the use of MCTs is that they can be metabolized more rapidly than long chain triglycerides (LCTs), typically used in other known solutions. In particular, MCTs, unlike LCTs, can be metabolized even without the intervention of lipase and also reach the liver directly through the portal venous system, without passing through the lymphatic system. The intake of MCTs therefore increases the concentration of ketone bodies in the blood more rapidly. The MCTs are therefore effective in promoting a rapid start of ketogenesis, that is, a rapid entry of the body into a condition of ketosis.

Advantageously, moreover, MCTs have antimicrobial properties, for example they inhibit the proliferation of some fungal species ("Medium-chain triglycerides inhibit growth of Malassezia: implications for prevention of systemic infection", Papavassilis C, Mach KK, Mayser PA, Crit. Care Med., 1999 Sep, 27(9):1781-6) and some fecal bacteria ("Protective effects of medium-chain triglycerides on the liver and gut in rats administered endotoxin", Kono H, Fujii H, Asakawa M, Yamamoto M, Matsuda M, Maki A, Matsumoto Y, Ann. Surg., 2003 Feb, 237(2):246-55), they can be effectively employed in the treatment of LPS (lipopolysaccharide) mediated endotoxemia and can play a role in reducing intestinal inflammatory states ("Fatty acids, inflammation and intestinal health in pigs", Liu Y., J. Anim. Sci. Biotechnol., 2015 Sep, 9;6 (1):41, doi:10.1186/s40104-015 -0040-1. eCollection 2015.).

In addition, MCTs, and in particular capric acid, can increase the absorption of nutrients through the intestinal membrane. In particular, the cells that form the intestinal membrane produce particular proteins, known as tight junctions (TJ), which regulate the passage of nutrients. The MCTs can interact with these proteins, further inducing the passage of nutrients through the cell membrane and promoting their absorption.

In some embodiments, which can be combined with all of the embodiments described here, the food formulation can comprise vegetable fibers between 10% and 38%.

In some embodiments, which can be combined with all of the embodiments described here, the food product of the present invention can comprise vegetable fibers between 12% and 40%.

In some embodiments, which can be combined with all of the embodiments described here, the vegetable fibers can comprise soluble fibers and/or insoluble fibers.

The soluble and insoluble vegetable fibers can comprise, for example: inulin, fructo-oligosaccharides, resistant modified starch, pectin, guar gum, wheat fibers, acacia fibers, bamboo fibers, corn fibers, chicory fibers, or combinations thereof, or also other types of fibers, for example psyllium or other. All of these, despite being or including carbohydrates, do not undergo transformation into glucose. Therefore, in the present description we will refer to vegetable fibers also including the fraction of carbohydrates, in particular polysaccharides, which cannot be metabolized.

In some embodiments, the resistant modified starch can be a starch chemically modified so as to be of non-hydrolyzable class RS4, therefore classifiable as a fiber.

Furthermore, soluble fibers slow down the absorption of sugars, while the insoluble fibers slow down intestinal transit times and, consequently, prolong the sense of satiety.

Such vegetable fibers can be advantageous for overcoming, or at least limiting, the disadvantages linked to the digestibility of known ketogenic food products.

In particular, the vegetable fibers, although not directly metabolized by the body, perform a regulating effect on the intestinal flora, which would otherwise be damaged by the low intake of carbohydrates.

The vegetable fibers therefore allow to obtain a more digestible food product, which maintains the intestinal bacterial flora intact and does not inhibit the proliferation of microorganisms necessary for the correct assimilation of food.

In addition, the vegetable fibers can regulate the intestinal microbiota, improving the effectiveness of the ketogenic diet.

In some embodiments, which can be combined with all of the embodiments described here, the food formulation and the food product can comprise other substances or ingredients, useful for the formulation to obtain the baked product, between 5% and 30%.

Such other substances or ingredients can be enzymes to promote leavening, for example amylases, and/or stabilizing substances, and/or emulsifying substances and/or yeasts and/or salt, and/or combinations thereof, the remaining part required to reach 100% consisting of water.

In some embodiments, which can be combined with all of the embodiments described here, the stabilizing substances can be substances able to amalgamate and provide chemical stability to the food formulation and to the food product.

In some embodiments, which can be combined with all of the embodiments described here, the emulsifying substances can be substances able to promote and/or stabilize the emulsion step of the food formulation and of the food product.

In some embodiments, which can be combined with all of the embodiments described here, the emulsifying substances can comprise sunflower lecithin.

The yeasts have the function of promoting the leavening of the food formulation before cooking in the oven.

In some embodiments, which can be combined with all of the embodiments described here, the yeasts may comprise brewer's yeast and/or chemical yeast, or combinations thereof.

### EXAMPLE 1

The following table shows, by way of example, the nutrient composition of a food formulation and of a baked food product, in particular bread, in accordance with some embodiments of the present invention.

| | Formulation | Product |
|---|---|---|
| Energy (kcal/100g) | 333.73 | 361.52 |
| Nutritional values | Weight (g/100g) | Weight (g/100g) |
| Proteins | 9.35 | 10.31 |
| Carbohydrates (of which Sugars) | 4.57 (0.40) | 4.82 (0.44) |
| Lipids (of which MCTs) | 25.13 (23.62) | 27.62 (26.03) |
| Fibers | 21.62 | 23.82 |

In the table, the components indicated in brackets should be understood as belonging to the class of components indicated in the previous row, therefore, for example, there are 4.57 grams of carbohydrates in the food formulation, of which 0.4 grams of sugars and 4.17 grams of carbohydrate of other types, and 25.13 grams of lipids, of which 23.62 grams of MCTs and 1.51 grams of lipids of other types.

In this example, the baked food product was obtained by cooking the food formulation in an oven.

For example, it was found that having cooked a food formulation with a total weight of 550.48 grams, of which 175 grams associated with water, in an oven at 190°C for 50min, a baked food product was obtained with a total weight of 499.48 grams, of which 125 grams associated with water.

In this example, it is possible to observe how the energy content per 100 grams of food product is higher than the energy content per 100 grams of food formulation, mainly due to the loss of water due to cooking.

In this example, the food formulation comprises 25.13% of lipids and has a ketogenic ratio of approximately 1.81:1.

In this example, the food product comprises 27.62% of lipids and has a ketogenic ratio of approximately 1.83:1.

The following table shows the composition of the ingredients of such food formulation and food product, and it is possible to observe the change in weight and percentage composition due to water loss.

| Components | Formulation | Product |
|---|---|---|
| | weight % | weight % |
| Water | 35 | 26.56 |
| Wheat gluten | 5 | 6 |
| Albumen | 2.5 | 3 |
| Vegetable oil (consisting of MTCs) | 25 | 28 |
| Fiber | 28.5 | 32 |
| Salt | 1 | 1.11 |
| Emulsifier | 1 | 1.11 |
| Yeast | 2 | 2.22 |
| Total | 100.00 | 100.00 |

In this example, the food formulation comprises a fraction of MCTs, supplied as vegetable oil, of 25%.

In this example, the food product has a fraction of MCTs, supplied as vegetable oil, of 28%.

### EXAMPLE 2

The following table shows, by way of example, the composition of nutrients of a food formulation and of a baked food product, in particular gluten-free bread, in accordance with some embodiments of the present invention.

| | Formulation | Product |
|---|---|---|
| Energy (kcal/100g) | 274 | 318 |
| Nutritional values | Weight (g/100g) | Weight (g/100g) |
| Proteins | 4 | 5 |
| Carbohydrates (of which Sugars) | 7 (0.10) | 8.4 (0.10) |
| Lipids (of which MCTs) | 20 (8.50) | 25.70 (9.50) |
| Fibers | 20 | 22 |

In the table, the components indicated in brackets should be understood as belonging to the class of components indicated in the previous row, therefore, for example, there are 7 grams of carbohydrates in the food formulation, of which 0.1 grams of sugars and 6.9 grams of carbohydrates of another type, and 20 grams of lipids, of which 8.50 grams of MCTs and 11.50 grams of lipids of another type.

In this example, the baked food product was obtained by cooking the food formulation in an oven.

Also in this example, it is possible to observe how the energy content per 100 grams of food product is higher than the energy content per 100 grams of food formulation, mainly due to the loss of water due to cooking.

In this example, the food formulation comprises 20% of lipids and has, also in this example, a ketogenic ratio of approximately 1.81:1.

In this example, the food product comprises 25.70% of lipids and has a ketogenic ratio of approximately 1.92:1.

The following table shows the composition of the ingredients of such food formulation and food product, and it is possible to observe the change in weight and percentage composition due to water loss.

| Components | Formulation | Product |
|---|---|---|
| | weight % | weight % |
| Water | 50 | 45.00 |
| Animal proteins | 5.0 | 5.50 |
| Vegetable fats (of which MTCs) | 20.10 (8.50) | 21.40 (9.50) |
| Fiber | 20.0 | 22.00 |
| Salt | 0.80 | 1.30 |
| Emulsifier | 1.60 | 1.80 |
| Yeast | 2.50 | 3.00 |
| Total | 100.00 | 100.00 |

In this example, the fraction of MCTs, with respect to the total lipids in the food formulation, is approximately 42.3%.

In this example, the fraction of MCTs, with respect to the total lipids in the food product, is approximately 44.4%.

It is clear that modifications and/or additions of components may be made to the food formulation and to the baked food product as described heretofore, without departing from the field and scope of the present invention.

It is also clear that, although the present invention has been described with reference to some specific examples, a person of skill in the art shall certainly be able to achieve many other equivalent forms of food formulation and food product, having the characteristics as set forth in the claims and hence all coming within the field of protection defined thereby.

## Claims

1. Food formulation for the production of a baked food product for use in the ketogenic diet, said food formulation comprising:
lipids between 20% and 60% by weight;
proteins between 0.25% and 9.5% by weight;
carbohydrates between 0.5% and 8% by weight;
vegetable fibers between 10% and 38% by weight;
wherein said lipids comprise medium-chain triglycerides (MCTs), having aliphatic carbon chains comprising from 6 to 12 carbon atoms, in particular substantially derived from caprylic acid or capric acid or lauric acid, or combinations thereof.

2. Food formulation as in claim 1, **characterized in that** it comprises lipids between 23% and 33% by weight.

3. Food formulation as in any claim hereinbefore, **characterized in that** said lipids are supplied as vegetable oils and/or fats, containing a mixture of medium-chain triglycerides (MCTs).

4. Food formulation as in any claim hereinbefore, **characterized in that** the MCTs constitute from 30% to 100%, in particular from 35% to 95%, by weight of the total quantity by weight of lipids present in said food formulation.

5. Food formulation as in any claim hereinbefore, **characterized in that** the MCTs constitute from 30% to 60% by weight of the total quantity by weight of lipids present in said food formulation.

6. Food formulation as in any previous claim from 1 to 4, **characterized in that** the MCTs constitute from 80% to 100% by weight of the total quantity by weight of lipids present in said food formulation.

7. Food formulation as in any claim from 1 to 6, **characterized in that** said food formulation is for the production of bread and has a ketogenic ratio between lipids and sum of carbohydrates and proteins comprised between 1.5:1 and 2.5:1.

8. Food formulation as in claim 7, **characterized in that** said food formulation comprises water between 25% and 55% by weight, in particular between 25% and 40% by weight, more in particular between 30% and 35% by weight.

9. Food formulation as in any claim from 1 to 8, **characterized in that** said food formulation is for the production of biscuits and/or crackers and/or breadsticks and/or sweet and/or savory snacks and/or similar baked products, and has a ketogenic ratio between lipids and sum of carbohydrates and proteins comprised between 1.5:1 and 6:1.

10. Food formulation as in any claim hereinbefore, **characterized in that** said proteins comprise vegetable proteins and/or animal proteins.

11. Food formulation as in any claim from 1 to 10, **characterized in that** said proteins comprise from 0.25% to 9.5% of vegetable proteins and from 0% to 4.5% of animal proteins of the total weight of the formulation.

12. Food formulation as in any claim from 1 to 11, **characterized in that** said proteins are exclusively vegetable proteins or are exclusively animal proteins.

13. Food formulation as in any claim hereinbefore, **characterized in that** said vegetable fibers comprise soluble vegetable fibers and/or insoluble vegetable fibers.

14. Food formulation as in any claim hereinbefore, for use in the treatment of drug-resistant epilepsy or neurodegenerative diseases, in particular Alzheimer's disease, Parkinson's disease and multiple sclerosis, or autism, migraine, tumors and brain trauma.

15. Baked food product for use in the ketogenic diet, obtainable by baking in an oven a food formulation as in any claim hereinbefore.

16. Baked food product for use in the ketogenic diet, comprising:
lipids between 22% and 62% by weight;
proteins between 0.25% and 10.5% by weight;
carbohydrates between 0.5% and 8% by weight;
vegetable fibers between 12% and 40% by weight;
wherein said lipids comprise medium-chain triglycerides (MCTs), having aliphatic carbon chains comprising from 6 to 12 carbon atoms, in particular substantially derived from caprylic acid or capric acid or lauric acid, or combinations thereof.

17. Food product as in claim 16, **characterized in that** said lipids are supplied as vegetable oils and/or fats containing a mixture of medium-chain triglycerides (MCTs).

18. Food product as in claim 16 or 17, **characterized in that** the MCTs constitute from 30% to 100%, in particular from 35% to 95%, by weight of the total quantity by weight of lipids present in said food product.

19. Food product as in any previous claim from 16 to 18, **characterized in that** the MCTs constitute from 30% to 60% by weight of the total quantity by weight of lipids present in said food product.

20. Food product as in any previous claim from 16 to 18, **characterized in that** the MCTs constitute from 80% to 100% by weight of the total quantity by weight of lipids present in said food product.

21. Food product as in any claim from 16 to 20, **characterized in that** it is bread and has a ketogenic ratio between lipids and sum of carbohydrates and proteins comprised between 1.5:1 and 2.5:1.

22. Food product as in any claim from 16 to 21, **characterized in that** it is biscuits and/or crackers and/or breadsticks and/or sweet and/or savory snacks and/or similar baked products, and has a ketogenic ratio between lipids and sum of carbohydrates and proteins comprised between 1.5:1 and 6:1.

23. Food product as in any claim from 16 to 22, **characterized in that** said proteins comprise vegetable proteins and/or animal proteins.

24. Food product as in any claim from 16 to 23, **characterized in that** said proteins comprise vegetable proteins between 0.25% and 10% and animal proteins between 0% and 5% of the total weight of the formulation.

25. Food product as in claim 23 or 24, **characterized in that** said vegetable proteins comprise one or more of: gluten, lupine protein, hazelnut protein, soy protein, pea protein, rice protein, oat protein, almond protein.

26. Food product as in any claim from 16 to 23, **characterized in that** said proteins are exclusively vegetable proteins or are exclusively animal proteins.

27. Food product as in any claim from 16 to 26, **characterized in that** said vegetable fibers comprise soluble vegetable fibers and/or insoluble vegetable fibers.

28. Food product as in any claim from 16 to 27, for use in the treatment of drug-resistant epilepsy or neurodegenerative diseases, in particular Alzheimer's disease, Parkinson's disease and multiple sclerosis, or autism, migraine, tumors and brain trauma.

29. Method to produce a baked food product used in the ketogenic diet obtained from a mixture containing a food formulation as in any claim from 1 to 14.

## Patentansprüche

1. Lebensmittelformulierung zur Herstellung eines gebackenen Lebensmittelprodukts zur Verwendung in der
ketogenen Diät, wobei die Lebensmittelformulierung umfasst:
Lipide zwischen 20 und 60 Gewichts-%;
Proteine zwischen 0.25 und 9.5 Gewichts-%;
Kohlenhydrate zwischen 0.5 und 8 Gewichts-%;
Pflanzenfasern zwischen 10 und 38 Gewichts-%;
wobei die Lipide mittelkettige Triglyceride (MCTs) umfassen, die
aliphatische Kohlenstoffketten, die 6 bis 12 Kohlenstoffatome umfassen, aufweisen, die insbesondere im Wesentlichen von Caprylsäure oder Caprinsäure oder Laurinsäure oder Kombinationen davon abstammen.

2. Lebensmittelformulierung nach Anspruch 1, **dadurch gekennzeichnet, dass** sie Lipide zwischen 23 und 33 Gewichts-% umfasst.

3. Lebensmittelformulierung nach einem der vorstehenden Ansprüche, **dadurch gekennzeichnet, dass** die Lipide als pflanzliche Öle und/oder Fette zugeführt werden, die eine Mischung aus mittelkettigen Triglyceriden (MCTs) enthalten.

4. Lebensmittelformulierung nach einem der vorstehenden Ansprüche, **dadurch gekennzeichnet, dass** die MCTs 30 bis 100 Gewichts-%, insbesondere 35 bis 95 Gewichts-%, der Gesamtmenge nach Gewicht an in der Lebensmittelformulierung vorhandenen Lipiden ausmachen.

5. Lebensmittelformulierung nach einem der vorstehenden Ansprüche, **dadurch gekennzeichnet, dass** die MCTs 30 bis 60 Gewichts-% der Gesamtmenge nach Gewicht an in der Lebensmittelzusammensetzung vorhandenen Lipiden ausmachen.

6. Lebensmittelformulierung nach einem der vorstehenden Ansprüche 1 bis 4, **dadurch gekennzeichnet, dass** die MCTs 80 bis 100 Gewichts-% der Gesamtmenge nach Gewicht an in der Lebensmittelformulierung vorhandenen Lipiden ausmachen.

7. Lebensmittelformulierung nach einem der Ansprüche 1 bis 6, **dadurch gekennzeichnet, dass** die Lebensmittelformulierung zur Herstellung von Brot ist und ein ketogenes Verhältnis zwischen Lipiden und der Summe aus Kohlenhydraten und Proteinen, die umfasst sind, zwischen 1.5:1 und 2.5:1 aufweist.

8. Lebensmittelformulierung nach Anspruch 7, **dadurch gekennzeichnet, dass** die Lebensmittelformulierung zwischen 25 und 55 Gewichts-% Wasser umfasst, insbesondere zwischen 25 und 40 Gewichts-%, mehr insbesondere zwischen 30 und 35 Gewichts-%.

9. Lebensmittelformulierung nach einem der Ansprüche 1 bis 8, **dadurch gekennzeichnet, dass** die Lebensmittelformulierung zur Herstellung von Keksen und/oder Crackern und/oder Brotstangen und/oder süße und/oder herzhafte Snacks und/oder ähnliche gebackene Produkte ist und ein ketogenes Verhältnis zwischen Lipiden und Summe aus Kohlenhydraten und Proteinen, die umfasst sind, zwischen 1.5:1 und 6:1 aufweist.

10. Lebensmittelzusammensetzung nach einem der vorstehenden Ansprüche, **dadurch gekennzeichnet, dass** die Proteine pflanzliche Proteine und/oder tierische Proteine umfassen.

11. Lebensmittelzusammensetzung nach einem der Ansprüche 1 bis 10, **dadurch gekennzeichnet, dass** die Proteine 0.25% bis 9.5% pflanzliche Proteine und 0% bis 4.5% tierische Proteine, bezogen auf das Gesamtgewicht der Formulierung, umfassen.

12. Lebensmittelformulierung nach einem der vorstehenden Ansprüche 1 bis 11, **dadurch gekennzeichnet, dass** die Proteine ausschließlich pflanzliche Proteine sind oder ausschließlich tierische Proteine sind.

13. Lebensmittelformulierung nach einem der vorstehenden Ansprüche, **dadurch gekennzeichnet, dass** die Pflanzenfasern lösliche Pflanzenfasern und/oder unlösliche Pflanzenfasern umfassen.

14. Lebensmittelformulierung nach einem der vorstehenden Ansprüche, zur Verwendung bei der Behandlung von medikamentenresistenter Epilepsie oder neurodegenerativen Erkrankungen, insbesondere Alzheimer-Krankheit, Parkinson-Krankheit und Multipler Sklerose, oder von Autismus, Migräne, Tumoren und Hirntraumata.

15. Gebackenes Lebensmittelprodukt zur Verwendung in der ketogenen Diät, erhältlich durch Backen einer Lebensmittelformulierung gemäß einem der vorstehenden Ansprüche in einem Ofen.

16. Gebackenes Lebensmittelprodukt zur Verwendung in der ketogenen Ernährung, umfassend:
Lipide zwischen 22 und 62 Gewichts-%;
Proteine zwischen 0.25 und 10.5 Gewichts-%;
Kohlenhydrate zwischen 0.5 und 8 Gewichts-%;
Pflanzenfasern zwischen 12 und 40 Gewichts-%;
wobei die Lipide mittelkettige Triglyceride (MCTs) umfassen, die aliphatische Kohlenstoffketten, die 6 bis 12 Kohlenstoffatome umfassen, aufweisen, die insbesondere im Wesentlichen von Caprylsäure, Caprinsäure oder Laurinsäure oder Kombinationen davon abstammen.

17. Lebensmittelprodukt nach Anspruch 16, **dadurch gekennzeichnet, dass** die Lipide als pflanzliche Öle und/oder Fette zugeführt werden, die eine Mischung aus mittelkettigen Triglyceriden (MCTs) enthalten.

18. Lebensmittelprodukt nach Anspruch 16 oder 17, **dadurch gekennzeichnet, dass** die MCTs 30 bis 100 Gewichts-%, insbesondere 35 bis 95 Gewichts-%, des Gesamtgewichts der Lipide, die in dem Lebensmittelprodukt vorhanden sind.

19. Lebensmittelprodukt nach einem der vorstehenden Ansprüche 16 bis 18, **dadurch gekennzeichnet, dass** die MCTs 30 bis 60 Gewichts-% der Gesamtmenge nach Gewicht an in dem Lebensmittelprodukt vorhandenen Lipiden ausmachen.

20. Lebensmittelprodukt nach einem der vorstehenden Ansprüche 16 bis 18, **dadurch gekennzeichnet, dass** die MCTs 80 bis 100 Gewichts-% der Gesamtmenge nach Gewicht an in dem Lebensmittelprodukt vorhandenen Lipiden ausmachen.

21. Lebensmittelprodukt nach einem der Ansprüche 16 bis 20, **dadurch gekennzeichnet, dass** es sich um Brot handelt und ein ketogenes Verhältnis zwischen Lipiden und Summe aus Kohlenhydraten und Proteinen, die umfasst sind, zwischen 1.5:1 und 2.5:1 aufweist.

22. Lebensmittelprodukt nach einem der Ansprüche 16 bis 21, **dadurch gekennzeichnet, dass** es Kekse und/oder Cracker und/oder Brotstangen und/oder süße und/oder herzhafte Snacks und/oder ähnliche Backwaren ist und ein ketogenes Verhältnis zwischen Lipiden und Summe aus Kohlenhydraten und Proteinen, die umfasst sind, zwischen 1.5:1 und 6:1 aufweist.

23. Lebensmittelprodukt nach einem der Ansprüche 16 bis 22, **dadurch gekennzeichnet, dass** die Proteine pflanzliche Proteine und/oder tierische Proteine umfassen.

24. Lebensmittelprodukt nach einem der Ansprüche 16 bis 23, **dadurch gekennzeichnet, dass** die Proteine pflanzliche Proteine zwischen 0.25% und 10% sowie tierische Proteine zwischen 0% und 5% des Gesamtgewichts der Formulierung umfassen.

25. Lebensmittelprodukt nach Anspruch 23 oder 24, **dadurch gekennzeichnet, dass** die pflanzlichen Proteine eines oder mehrere umfassen von: Gluten, Lupinenprotein, Haselnussprotein, Sojaprotein, Erbsenprotein, Reisprotein, Haferprotein, Mandelprotein.

26. Lebensmittelprodukt nach einem der Ansprüche 16 bis 23, **dadurch gekennzeichnet, dass** die Proteine ausschließlich pflanzliche Proteine sind oder ausschließlich tierische Proteine sind.

27. Lebensmittelprodukt nach einem der Ansprüche 16 bis 26, **dadurch gekennzeichnet, dass** die Pflanzenfasern lösliche Pflanzenfasern und/oder unlösliche Pflanzenfasern umfassen.

28. Lebensmittelprodukt nach einem der Ansprüche 16 bis 27, zur Verwendung bei der Behandlung von medikamentenresistenter Epilepsie oder neurodegenerativer Erkrankungen, insbesondere der Alzheimer-Krankheit, der Parkinson-Krankheit und Multipler Sklerose, oder von Autismus, Migräne, Tumoren und Hirntraumata.

29. Verfahren zur Herstellung eines gebackenen Lebensmittelprodukts, das in der ketogenen Diät verwendet wird, das aus einer Mischung, die die Lebensmittelformulierung nach einem der Ansprüche 1 bis 14 enthält, erhalten wird.

## Revendications

1. Formulation alimentaire pour la production d'un produit alimentaire cuit au four destiné à être utilisé dans le régime cétogène, ladite formulation alimentaire comprenant :
des lipides entre 20% et 60% en poids ;
des protéines entre 0.25% et 9.5% en poids ;
des glucides entre 0.5% et 8% en poids ;
des fibres végétales entre 10% et 38% en poids ;
lequel lesdits lipides comprennent des triglycérides à chaîne moyenne (TCM), ayant des chaînes carbonées aliphatiques comprenant de 6 à 12 atomes de carbone, en particulier provenant essentiellement de l'acide caprylique ou de l'acide caprique ou de l'acide laurique, ou de leurs combinaisons.

2. Formulation alimentaire selon la revendication 1, **caractérisée en ce qu'**elle comprend des lipides entre 23% et 33% en poids.

3. Formulation alimentaire selon l'une quelconque des revendications précédentes, **caractérisée en ce que** lesdits lipides sont apportés sous forme d'huiles végétales et/ou de matières grasses, contenant un mélange de triglycérides à chaîne moyenne (TCM).

4. Formulation alimentaire selon l'une quelconque des revendications précédentes, **caractérisée en ce que** les TCM constituent de 30% à 100%, en particulier de 35% à 95%, en poids de la quantité totale en poids de lipides présents dans ladite formulation alimentaire.

5. Formulation alimentaire selon l'une quelconque des revendications précédentes, **caractérisée en ce que** les TCM constituent de 30% à 60% en poids de la quantité totale en poids de lipides présents dans ladite formulation alimentaire.

6. Formulation alimentaire selon l'une quelconque des revendications 1 à 4, **caractérisée en ce que** les TCM constituent de 80% à 100% en poids de la quantité totale en poids de lipides présents dans ladite formulation alimentaire.

7. Formulation alimentaire selon l'une quelconque des revendications 1 à 6, **caractérisée en ce que** ladite formulation alimentaire est destinée à la production de pain et présente un rapport cétogène entre les lipides et la somme des glucides et des protéines compris entre 1.5:1 et 2.5:1.

8. Formulation alimentaire selon la revendication 7, **caractérisée en ce que** ladite formulation alimentaire comprend de l'eau entre 25% et 55% en poids, en particulier entre 25% et 40% en poids, plus particulièrement entre 30% et 35% en poids.

9. Formulation alimentaire selon l'une quelconque des revendications 1 à 8, **caractérisée en ce que** ladite formulation alimentaire est destinée à la production de biscuits et/ou de crackers et/ou de gressins
et/ou d'en-cas sucrés et/ou salés et/ou de produits cuits au four similaires, et présente un rapport cétogène entre les lipides et la somme des glucides et des protéines compris entre 1.5:1 et 6:1.

10. Formulation alimentaire selon l'une quelconque des revendications précédentes, **caractérisée en ce que** lesdites protéines comprennent des protéines végétales et/ou des protéines animales.

11. Formulation alimentaire selon l'une quelconque des revendications 1 à 10, **caractérisée en ce que** lesdites protéines comprennent de 0.25% à 9.5% de protéines végétales et de 0% à 4.5% de protéines animales du poids total de la formulation.

12. Formulation alimentaire selon l'une quelconque des revendications 1 à 11, **caractérisée en ce que** lesdites protéines sont exclusivement des protéines végétales ou exclusivement des protéines animales.

13. Formulation alimentaire selon l'une quelconque des revendications précédentes, **caractérisée en ce que** lesdites fibres végétales comprennent des fibres végétales solubles et/ou des fibres végétales insolubles.

14. Formulation alimentaire selon l'une quelconque des revendications précédentes, destinée à être utilisée dans le traitement de l'épilepsie pharmacorésistante ou des maladies neurodégénératives, en particulier la maladie d'Alzheimer, la maladie de Parkinson et la sclérose en plaques, ou l'autisme, la migraine, les tumeurs et le traumatisme crânien.

15. Produit alimentaire cuit au four destiné à être utilisé dans le régime cétogène, pouvant être obtenu par cuisson au four d'une formulation alimentaire selon l'une quelconque des revendications précédentes.

16. Produit alimentaire cuit au four destiné à être utilisé dans le régime cétogène, comprenant :
des lipides entre 22% et 62% en poids ;
des protéines entre 0.25% et 10.5% en poids ;
des glucides entre 0.5% et 8% en poids ;
des fibres végétales entre 12% et 40% en poids ;
lequel lesdits lipides comprennent des triglycérides à chaîne moyenne (TCM), ayant des chaînes carbonées aliphatiques comprenant de 6 à 12 atomes de carbone, en particulier provenant essentiellement de l'acide caprylique ou de l'acide caprique ou de l'acide laurique, ou de leurs combinaisons.

17. Produit alimentaire selon la revendication 16, **caractérisé en ce que** lesdits lipides sont apportés sous forme d'huiles végétales et/ou de matières grasses contenant un mélange de triglycérides à chaîne moyenne (TCM).

18. Produit alimentaire selon la revendication 16 ou 17, **caractérisé en ce que** les TCM constituent de 30% à 100%, en particulier de 35% à 95%, en poids de la quantité totale en poids de lipides présents dans ledit produit alimentaire.

19. Produit alimentaire selon l'une quelconque des revendications 16 à 18, **caractérisé en ce que** les TCM constituent de 30% à 60% en poids de la quantité totale en poids de lipides présents dans ledit produit alimentaire.

20. Produit alimentaire selon l'une quelconque des revendications 16 à 18, **caractérisé en ce que** les TCM constituent de 80% à 100% en poids de la quantité totale en poids de lipides présents dans ledit produit alimentaire.

21. Produit alimentaire selon l'une quelconque des revendications 16 à 20, **caractérisé en ce qu'**il s'agit de pain et présente un rapport cétogène entre les lipides et la somme des glucides et des protéines compris entre 1.5:1 et 2.5:1.

22. Produit alimentaire selon l'une quelconque des revendications 16 à 21, **caractérisé en ce qu'**il s'agit de biscuits et/ou de crackers et/ou de gressins et/ou d'en-cas sucrés et/ou salés et/ou de produits cuits au four similaires, et présente un rapport cétogène entre les lipides et la somme des glucides et des protéines compris entre 1.5:1 et 6:1.

23. Produit alimentaire selon l'une quelconque des revendications 16 à 22, **caractérisé en ce que** lesdites protéines comprennent des protéines végétales et/ou des protéines animales.

24. Produit alimentaire selon l'une quelconque des revendications 16 à 23, **caractérisé en ce que** lesdites protéines comprennent de 0.25% à 10% de protéines végétales et de 0% à 5% de protéines animales du poids total de la formulation.

25. Produit alimentaire selon la revendication 23 ou 24, **caractérisé en ce que** lesdites protéines végétales comprennent une ou plusieurs des protéines suivantes : gluten, protéine de lupin, protéine de noisette, protéine de soja, protéine de pois, protéine de riz, protéine d'avoine, protéine d'amande.

26. Produit alimentaire selon l'une quelconque des revendications 16 à 23, **caractérisé en ce que** lesdites protéines sont exclusivement des protéines végétales ou exclusivement des protéines animales.

27. Produit alimentaire selon l'une quelconque des revendications 16 à 26, **caractérisé en ce que** lesdites fibres végétales comprennent des fibres végétales solubles et/ou des fibres végétales insolubles.

28. Produit alimentaire selon l'une quelconque des revendications 16 à 27, destiné à être utilisé dans le traitement de l'épilepsie pharmacorésistante ou des maladies neurodégénératives, en particulier la maladie d'Alzheimer, la maladie de Parkinson et la sclérose en plaques, ou l'autisme, la migraine, les tumeurs et le traumatisme crânien.

29. Procédé pour produire un produit alimentaire cuit au four utilisé dans le régime cétogène obtenu
à partir d'un mélange contenant une formulation alimentaire selon l'une quelconque des revendications 1 à 14.
